(19) **Europäisches Patentamt / European Patent Office / Office européen des brevets**

(11) **EP 4 571 533 A1**

(12) **EUROPEAN PATENT APPLICATION**
published in accordance with Art. 153(4) EPC

(43) Date of publication:
**18.06.2025  Bulletin 2025/25**

(21) Application number: **24855065.9**

(22) Date of filing: **19.09.2024**

(51) International Patent Classification (IPC):
**G06F 16/532** (2019.01)

(52) Cooperative Patent Classification (CPC):
**G06F 16/532**

(86) International application number:
**PCT/CN2024/119667**

(87) International publication number:
**WO 2025/077538 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.10.2023  CN 202311298303**
**08.10.2023  CN 202311299011**
**08.10.2023  CN 202311304367**

(71) Applicant: **Makeblock Co., Ltd.**
**Shenzhen, Guangdong 518000 (CN)**

(72) Inventors:
- **ZENG, Haihan**
  **Shenzhen, Guangdong 518000 (CN)**
- **FU, Jinquan**
  **Shenzhen, Guangdong 518000 (CN)**

(74) Representative: **Studio Torta S.p.A.**
**Via Viotti, 9**
**10121 Torino (IT)**

(54) **IMAGE PROCESSING METHOD FOR LASER PROCESSING, MACHINE, SYSTEM, AND MEDIUM**

(57)   The present application provides a picture processing method for laser machining, machine, system and medium, the method includes: obtaining picture generation information for generating a target picture required by a user; where the picture generation information includes at least picture description information; processing the picture generation information by a picture generation model to obtain a target picture consistent with the picture generation information; and importing the target picture into a laser machining process of a laser machining device. The technical solution of the present application can save time for the user to obtain the target picture and also ensure that the target picture obtained meets the user's needs. The user can adopt a more convenient way to obtain the target picture, which helps to improve the efficiency of the laser machining.

Obtaining Picture Generation Information for Generating Target Picture Required by User; Picture Generation Information Includes at Least Picture Description Information — S110

Processing Picture Generation Information by Picture Generation Model to Obtain Target Picture Consistent with Picture Generation Information — S120

Importing Target Picture Into Laser Machining Process of Laser Machining Device — S130

FIG. 1

EP 4 571 533 A1

## Description

## CROSS-REFERENCE TO RELATED APPLICATIONS

This application claims priorities to a Chinese application No. 2023112983031, filed on October 8, 2023, titled "Picture Processing Method for Laser Machining, Machine, Computer System and Medium", a Chinese application No. 202311299011X, filed on October 8, 2023, titled "Picture Processing Method for Laser Machining, Machine, Computer System and Medium", a Chinese application No. 2023113043678, filed on October 8, 2023, titled "Picture Processing Method for Laser Machining, Machine, Computer System and Medium", the entire contents of which are incorporated herein by reference.

## TECHNICAL FIELD

The present application relates to the technical field of laser machining, and specifically to a picture processing method for laser machining, a computer numerical control machine, a numerical control system and a storage medium.

## BACKGROUND

When users use laser machining device to engrave pictures on the machined materials, they usually download the picture materials to the local area, and then import the picture materials into the canvas of the laser software for use. When the user wants to modify or replace some of the contents of the picture material to make it more perfect, or to make the material more rich in detail, for users who do not know how to use professional retouching software, it is more difficult to achieve the above purposes.

## SUMMARY

The present application proposes a picture processing method for laser machining, a computer numerical control machine, a numerical control system, and a storage medium for improving the efficiency of obtaining a picture by a machining device when performing laser machining.

According to an aspect of the embodiments of the present application, the present application provides a picture processing method for laser machining, which includes:

obtaining picture generation information for generating a target picture required by a user; where the picture generation information includes at least picture description information;
processing the picture generation information by a picture generation model to obtain a target picture consistent with the picture generation information;

and
importing the target picture into a laser machining process of a laser machining device.

According to an aspect of the embodiment of the present application, there is provided a numerical control system, including at least one computer numerical control machine and at least one processor;

where the processor is configured for performing the picture processing method for laser machining provided by the above embodiments; and
the computer numerical control machine is configured for transmitting electromagnetic energy to a machined material arranged inside the computer numerical control machine based on the target picture obtained by the processor.

According to an aspect of the embodiment of the present application, there is provided a computer-readable storage medium, on which computer-readable instructions are stored, where when the computer-readable instructions, executed by a processor of a computer, cause the computer to perform the picture processing method for laser machining provided by above various optional embodiments.

According to an aspect of the embodiment of the present application, there is provided a computer program product, comprising computer instructions, wherein the computer instructions, when executed by a processor, cause the computer to implement the picture processing method for laser machining in the above technical solutions.

The present application obtains picture generation information for generating a target picture required by the user, the picture generation information including at least picture description information, processes the picture generation information by a picture generation model to obtain a target picture consistent with the picture generation information, and imports the target picture into a laser machining process of the laser machining device, such that it can obtain the target picture for the laser machining by simply providing the picture generation information, which can save time for the user to obtain the target picture and also ensure that the target picture obtained meets the user's needs. The user can adopt a more convenient way to obtain the target picture, which helps to improve the efficiency of the laser machining.

Other features and advantages of the present application will become apparent through the following detailed description, or will be learned in part through the practice of the present application.

It should be understood that the above general description and the detailed description that follows are merely exemplary and do not limit the present application.

## BRIEF DESCRIPTION OF THE DRAWINGS

The foregoing and other objects, features, and advantages of the present application will become more apparent by describing in detail exemplary embodiments thereof with reference to the accompanying drawings.

FIG. 1 is a flowchart of a picture processing method for laser machining according to an embodiment of the present application.

FIG. 2 is a flowchart of the picture processing method for laser machining according to an embodiment of the present application.

FIG. 3 is a flowchart of the picture processing method for laser machining according to an embodiment of the present application.

FIG. 4A is a schematic diagram of a scene of a picture processing method for laser machining according to an embodiment of the present application.

FIG. 4B is a schematic diagram of a first scene of the picture processing method for laser machining according to an embodiment of the present application.

FIG. 5A is a schematic diagram of a second scene of the picture processing method for laser machining according to an embodiment of the present application.

FIG. 5B is a flowchart of the picture processing method for laser machining corresponding to the second scene according to an embodiment of the present application.

FIG. 6A is a schematic diagram of a third scene of the picture processing method for laser machining according to an embodiment of the present application.

FIG. 6B is a schematic diagram of a fourth scene of the picture processing method for laser machining according to an embodiment of the present application.

FIG. 6C is a flowchart of the picture processing method for laser machining corresponding to the third and fourth scenes according to an embodiment of the present application.

FIG. 7A is a schematic diagram of a fifth scene of the picture processing method for laser machining according to an embodiment of the present application.

FIG. 7B is a flowchart of the picture processing method for laser machining corresponding to the fifth scene according to an embodiment of the present application.

FIG. 8 is a flowchart of a picture generation method for laser machining according to an embodiment of the present application.

FIG. 9 is a schematic diagram of a sixth scene of the picture processing method for laser machining according to an embodiment of the present application.

FIG. 10 is a schematic diagram of a seventh scene of the picture processing method for laser machining according to an embodiment of the present application.

FIG. 11 is a schematic structural diagram of a computer numerical control machine according to an embodiment of the present application.

FIG. 12 is a schematic structural diagram of a numerical control system according to an embodiment of the present application.

## DETAILED DESCRIPTION OF THE EMBODIMENTS

Example embodiments will now be described more fully with reference to the accompanying drawings. However, the example embodiments can be implemented in a variety of forms and should not be construed as being limited to the examples set forth herein; rather, the provision of these example embodiments allows that the description of the present application will be more comprehensive and complete and that the idea of the example embodiments will be fully communicated to those skilled in the art. The accompanying drawings are only schematic illustrations of this application and are not necessarily to scale. Identical accompanying symbols in the drawings indicate identical or similar parts, and thus repetitive descriptions of them will be omitted.

In addition, the features, structures, or characteristics described may be combined in one or more example embodiments in any suitable manner. In the following description, many specific details are provided thereby giving a full understanding of the example embodiments of the present application. However, those skilled in the art will realize that it is possible to practice the technical embodiments of the present application and omit one or more of the specific details, or that other methods, groups of elements, steps, etc. may be employed. In other cases, well-known structures, methods, implementations, or operations are not shown or described in detail to avoid overshadowing and obscuring aspects of the present application.

Some of the block diagrams shown in the accompanying drawings are functional entities that do not necessarily have to correspond to physically or logically separate entities. These functional entities may be implemented in software form, or in one or more hardware modules or integrated circuits, or in different networks and/or processor devices and/or microcontroller devices.

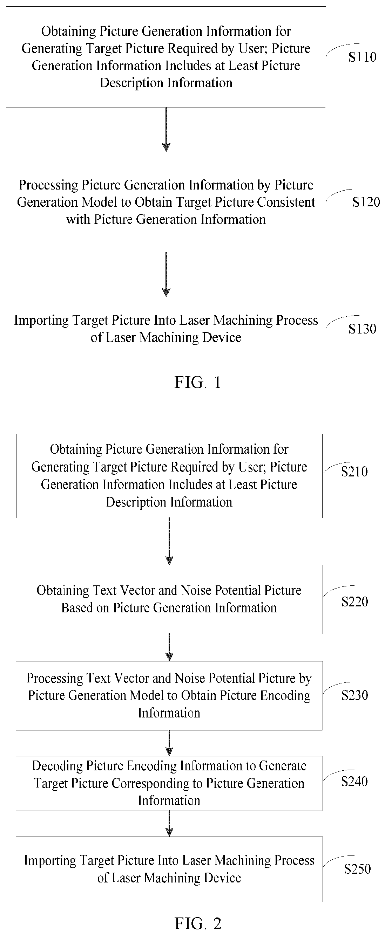

FIG. 1 is a flowchart of a picture processing method for laser machining according to an embodiment of the present application, which may be executed by a terminal device or a server, or may be executed by the terminal device and the server together, and where not otherwise specified, the terminal device will be taken as the subject of execution of an embodiment of the present application. The method includes:

S110, obtaining picture generation information for generating a target picture required by a user; the picture generation information includes at least picture description tion information.

Specifically, the user may generate the target picture in various ways, such as generating the target picture based on the description information, modifying the to-be-processed picture to generate the target picture, etc.. The picture generation information is the information required to generate the target picture, which should at least include the picture description information, which may be a description of the generated target picture, or a description of the modification of the to-be-processed picture, to make the to-be-processed picture change to the target picture. The user may upload the picture generation information to the terminal device, so that the terminal device obtains the picture generation information.

In an embodiment, the content contained in the picture generation information may be different based on different picture generation modes. If the user needs to generate the target picture based on the description information, and the picture generation mode may be referred to as a text generating picture mode, then the picture generation information includes the picture description information of the generated target picture. At this time, a picture generation request may be received, which includes the picture description information of the user for the required target picture, and thus the picture description information is extracted as the picture generation information.

In an embodiment, if the user needs to modify the to-be-processed picture to generate the target picture, the picture generation information includes the to-be-processed picture and the picture description information corresponding to the to-be-processed picture, and the picture description information at this time indicates modification of the to-be-processed picture. The to-be-processed picture may be a determined original picture, or a graffiti picture drawn by the user by hand or using computer software, or a picture to which graffiti is added on the existing original picture, and the picture to which graffiti is added by the user refers to a picture to which the user adds traces of graffiti on the basis of the original picture. The graffiti picture includes the user's graffiti traces, and the graffiti traces may refer to the traces of the user's scribbling on the photo. For the different types of to-be-processed pictures, the picture generation method corresponding to the original picture can be referred to as a picture generating picture mode, and the picture generation method corresponding to the graffiti picture can be referred to as the graffiti generating picture mode.

Based on the above description, it can be determined that in the technical solution of the present application, there are three modes of generating the target picture: generating the target picture based only on the picture description information, generating the target picture by modifying a determined to-be-processed picture, and modifying a to-be-processed picture obtained by graffiti to generate the target picture, these three modes are abbreviated to text generating picture mode, picture generating picture mode, and graffiti generating picture mode, respectively, and to facilitate differentiation, the to-be-processed picture in the picture generating picture mode is subsequently recorded as the original picture, and the to-be-processed picture in the graffiti generating picture mode is recorded as the graffiti picture.

Further, the picture description information maybe correspond to text directly input by the user, or maybe correspond to voice input by the user, which is not limited herein.

When the picture description information is in the form of voice, the voice data in the picture description information is first obtained, and the voice data is textually converted to obtain text data, and then the text data is processed.

The algorithm for text conversion of the voice data may be based on a parametric model for voice-to-text conversion, and may be a conversion algorithm based on deep learning, etc., which is not limited here. Specifically, a pre-training model may be trained to convert the voice data into text data.

The pre-training model may be a Recurrent Neural Network (RNN), a long short-term memory (LSTM), etc., which is not limited herein.

The user may generate description information of the to-be-generated picture according to a variety of forms to satisfy the user's convenience of use.

The user uploads the to-be-processed picture to the terminal device, and generates picture description information for the to-be-processed picture. The picture description information is used to characterize the user's intention to modify the to-be-processed picture, describe how to modify the to-be-processed picture, that is, giving the processing scope of the to-be-processed picture. For example, the picture description information is: "add a cat", the picture description information indicates that an element [cat] is added to the to-be-processed picture, and the final picture generated is a combination of the to-be-processed picture and the elements in the picture description information. For example, the picture description information is: "cat", which means that the user wants to modify the graffiti picture by adding cat to it.

The target picture is obtained from the combination of the picture description information and the to-be-processed picture.

For example, the picture description information includes: gift, the graffiti picture is a love heart surrounded by lines hand-drawn by the user, and the target picture is to turn the hand-drawn love heart in the graffiti picture into a gift box in the shape of a love heart, or into a gift in the shape of a love heart, and so on.

As an optional embodiment, the picture description information may be used to indicate the user's editing intention for the graffiti trace. The picture description information may also describe an element for replacing the graffiti trace which is used to add to the region where the graffiti trace of the graffiti picture is located.

Exemplarily, the graffiti picture has a graffiti trace in the upper left corner region of the graffiti picture, and the picture description information reads: add a cat; then the cat is added to the upper left corner region of the graffiti picture, and the generated target picture retains the composition of the graffiti picture except for the graffiti trace and adds a new element of a cat.

S 120, processing the picture generation information by a picture generation model to obtain a target picture consistent with the picture generation information.

Specifically, the picture generation model may generate the target picture required by the user based on the picture generation information provided by the user.

In an embodiment, the picture generation model may include a deep learning model which includes an attention mechanism and a scheduling algorithm (Scheduling), which is limited herein. Exemplarily, the picture generation model adopts the deep learning model based on a diffusion model, converts the input text description information and the to-be-processed picture into depth information, and generates a candidate picture based on the depth information.

In an embodiment, if the picture generation information includes only picture description information, the picture description information is processed by the picture generation model to obtain the target picture. If the picture generation information includes the picture description information and the to-be-processed picture, the picture description information and the to-be-processed picture are processed by the picture generation model to obtain the target picture.

In an embodiment, the picture generation model processes the picture generation information to obtain a plurality of candidate pictures, from which the user may select the required candidate picture as the target picture, and the user may determine the target picture by a click operation, then the terminal device detects a click operation on the candidate picture, and takes at least one candidate picture corresponding to the click operation as the target picture that corresponds to the picture generation information.

S130, importing the target picture into a laser machining process of a laser machining device.

Specifically, the laser machining process refers to a process of laser machining based on the target picture. The terminal device sends the target picture to a control module of the laser machining device, and a control module of the laser machining device generates a laser machining path corresponding to the target picture based on the imported target picture, and sends the path to an actuating structure of the laser machining device to cause the actuating body to carry out laser machining in accordance with the laser machining path, and ultimately cause the user to obtain a laser machining product consistent with the target picture.

In one embodiment, the laser machining process of the laser machining device may be a process on the terminal device for generating laser machining instructions of the laser machining device, in which case the terminal device generates a laser machining file (e.g., a svg file) based on the target picture, and then sends the laser machining file to the control module of the laser machining device, and then the control module generates operation instructions of the actuator in the laser machining device based on the laser machining file, causing the user to obtain a laser machining product consistent with the target picture. Then the laser machining file is sent to the control module of the laser machining device, whereupon the control module generates operation instructions for the actuator of the laser machining device based on the laser machining file, causing the actuator to carry out laser machining in accordance with the corresponding operation instructions, and ultimately enabling the user to obtain a laser machining product consistent with the target picture.

The present application obtains picture generation information for generating a target picture required by the user, the picture generation information including at least picture description information, processes the picture generation information by the picture generation model to obtain a target picture consistent with the picture generation information, and imports the target picture into a laser machining process of the laser machining device. The user only needs to input the picture generation information, the picture generation model processes the picture generation information to obtain the target picture required for the user, and imports the target picture into the laser machining process of the laser machining device, such that it can save time for the user to obtain the target picture while user performing the laser machining processing and also ensure that the target picture obtained meets the user's needs. The user can adopt a more convenient way to obtain the target picture, which helps to improve the efficiency of the laser machining.

FIG. 2 is a flowchart of a picture processing method for laser machining according to an embodiment of the present application, which mainly describes a specific implementation process of the picture generating picture mode and the graffiti generating picture mode, which includes:

S210, obtaining picture generation information for generating a target picture required by the user; the picture generation information includes at least picture description information.

In an embodiment, the picture generation request includes picture description information and the to-be-processed picture, which may be input by the user to the terminal device. Optionally, the user may raise the picture generation request to obtain the target picture, and the picture description information and the to-be-processed picture may be included in the picture generation request, where the picture description information and the to-be-processed picture are the picture generation information. The to-be-processed picture may be an original picture or a graffiti picture. If the to-be-processed picture is an original picture, it belongs to the picture generating picture mode. if the to-be-processed picture is a graffiti picture, it belongs to the graffiti generating picture mode. In an embodiment, the user may raise the picture generation request to obtain the target picture, the picture generation request includes picture description information of the user for the required target picture, then the picture description information is used as the picture generation information. This situation belongs to the text generating picture mode. The picture description information is equivalent to the user's conception of the target picture, for example, if the user wants to find a target picture that includes the constituent element of a cat and the picture style is black and white, then the picture description information may be: cat, white&black.

In an embodiment, when determining the picture description information, the picture description field and a picture style are also determined based on the picture description information, and the picture description field is used to characterize the constituent elements of the target picture.

Further, the picture description field is used to characterize the constituent elements of the picture, and the user may input a preset number of words as the constituent elements, such as cats and birds. The picture style represents the unique form and elements of the ultimately generated target picture, and is used to characterize the color, shape, line, texture, and light and shadow of the picture. For example, the picture style may include a pixel style, a bright style, a colorful style, etc., where the pixel style denotes the style of composing the picture through pixel units.

As an optional embodiment, a plurality of picture style options and corresponding preview pictures are generated in advance, and the user clicks on one of the picture style options so as to convert the keywords corresponding to the picture style into the picture description field, and finally generate picture description information.

For example, the user enters cat as the picture description field, and then selects picture style option A, which corresponds to a colorful style, and converts the keyword colorful of the colorful style to the picture description field, and the final picture description information is expressed as: cat, colorful.

In this embodiment, the user may customize the target picture according to his or her needs, thereby generating the picture description information, the picture description information includes the user's conception of the target picture, and in the subsequent of generating the target picture through processing the picture description information, the generated target picture is made to satisfy the user's needs, thereby improving the efficiency of obtaining the picture used for laser machining.

S220, obtaining a text vector and a noise potential picture based on the picture generation information.

Specifically, the text vector can be obtained based on the picture description information in the picture generation information, and the noise potential picture is a tensor for diffusing noise in the potential space of the graffiti generating picture mode. The potential space is smaller compared to the pixel space, which reduces the size of the amount of data to be processed, and thus the speed of generating the target picture can be improved.

In an embodiment, the picture generation information includes picture description information and the to-be-processed picture, and the picture description information and the to-be-processed picture need to be pre-processed to obtain the text vector and the noise potential picture, respectively.

In an embodiment, pre-processing the picture description information refers to encoding the picture description information, which has been converted into the text vector. The picture description information consists of fields, and the picture description information is encoded by a text encoder to generate the text vector. After encoding each word composing the picture description information, a token for each word is generated, and the each token forms the text vector.

In an embodiment, the process of encoding the picture description information may specifically include:

S221, performing a word division process on the picture description information to obtain a text sequence; and
S222, encoding the text sequence to obtain the text vector.

In this embodiment, the text description information is subjected to a word division process to obtain a text sequence. The text sequence may be output to a text encoder constituted by a Transformer model, so as to convert each word in the text sequence into a token (token), which in turn constitutes a coded list, i.e., a text vector, so as to enable the picture generation model to comprehend the text description information, and thus generate a target picture consistent with the text description information.

In an embodiment, pre-processing the to-be-processed picture to obtain the noise potential picture includes:

S223, extracting features of the to-be-processed picture to obtain picture features; and
S224, adding Gaussian noise to the picture features to obtain the noise potential picture.

As an embodiment, a Conditional Denoising Autoencoder is used to extract features of the original picture, in which the original picture is processed into a form that can be run in the picture generation model, and noise is added to the picture features by adding Gaussian noise.

In this process, the noise reduction intensity parameter can be set to control the amount of noise added. A noise reduction intensity parameter of 0 indicates that no noise is added; a noise reduction intensity parameter of 1 indicates that the maximum amount of noise is added to make the potential picture to be a complete random tensor to enable the picture generation model to predict pictures based on the noise potential picture.

In this embodiment, the picture description information is encoded, so that the picture generation model is able to guide the process of picture prediction based on the encoded picture description information, which in turn makes the candidate picture generated finally consistent with the picture description information, so that the features of the candidate picture satisfy the user's need to find the candidate picture, which is conducive to improving the user's experience of using the picture.

In an embodiment, the picture generation information includes only the picture description information, and S220 is specific as follows:

S225, encoding the picture description information to obtain the text vector; and
S226, obtaining a candidate potential picture, and taking the candidate potential picture as the noise potential picture.

The specific implementation process of S225 is the same as the aforementioned S221-S222, which will not be repeated here. The candidate potential picture here may be a random tensor randomly generated in the potential space of the picture generation model for diffusing noise, the random tensor may be directly used as the noise potential picture.

S230, processing the text vector and the noise potential picture by the picture generation model to obtain picture encoding information.

In an embodiment, the picture generation model includes a deep learning model, and S230 specifically includes:

S231a, inputting the text vector into the deep learning model to generate a first prediction noise;
S232a, subtracting the noise potential picture from the first prediction noise to obtain a picture noise residual; and
S233a, outputting picture encoding information based on the picture noise residual.

Specifically, the text vector are input to the deep learning model in a matrix form, and the deep learning model processes the text vector to convert them to the first prediction noise. The first prediction noise and the noise potential picture are in matrix form. The denoising process of the noise potential picture is guided and predicted by the first prediction noise, and the denoising operation is performed by subtracting the matrix of the noise potential picture from the matrix of the first prediction noise to obtain the picture noise residual, and the amount of noise expressed in the current picture noise residual has met the requirements, and then the current picture noise residual is output as the picture encoding information.

In this embodiment, the first prediction noise is generated by processing the text vector, and then the first prediction noise is utilized to diffuse the noise potential picture, thereby reducing the amount of noise in the final output, and improving the clarity of the final generated target picture, and then after subsequent decoding, the target picture with high clarity can be obtained, and the noise of the target picture will not affect the effect of laser machining when laser machining is performed.

As an optional embodiment, the process of subtracting the noise potential picture from the first prediction noise is actually a sampling process, in which the noise potential picture is subtracted from the first prediction noise to obtain the picture noise residual; and then the picture noise residual is utilized to subtract from the noise potential picture to obtain new picture noise residual. Repeating the above process is to use the picture generation model for a number of sampling, in order to output the final picture noise residual, the final picture noise residual satisfies the sampling requirements, then as the picture encoding information to be output. The picture encoding information is also known as picture representation. Satisfying the sampling requirements may be one or more of the cases in which the number of samples reaches a preset number of times, and the picture noise residual is less than a preset threshold, etc.

In this embodiment, the first prediction noise is generated by processing the text vector, and then the first prediction noise is used to forward diffuse the noise potential picture, and the role of each sampling is to reduce the amount of noise in the final output, and when the sampling requirements is satisfied, it is indicated that the amount of noise has already satisfied the requirements, and after decoding the picture encoding information, the target picture with high clarity can be obtained, and the noise of the target picture will not affect the effect of laser machining when performing the laser machining.

In an embodiment, the text vector includes at least one character, and S231a further includes: processing the at least one character through an attention mechanism to obtain a two-dimensional array; inputting the two-dimensional array into the deep learning model to output the first prediction noise.

Specifically, the deep learning model may include a convolutional layer, a downsampling layer, a pooling layer, an inverse convolutional layer, an upsampling layer, and an activation function. The attention mechanism may be a cross-attention mechanism or a self-attention mechanism, which is not limited herein. The deep learning model may be a U-NET network, or may be a CNN, DNN, or other deep learning model capable of realizing picture prediction, which is not limited herein.

Exemplarily, the U-NET network is a commonly used picture segmentation network architecture that includes a down-sampling path and an up-sampling path. The U-NET network employs adopts semantic segmentation for picture prediction, and the convolution module of the U-shape structure can better sample the picture features.

In this embodiment, the picture encoding information is processed by the U-NET network, which not only can improve the accuracy of the predicted picture, and but also improve the efficiency of the generated picture.

The down-sampling path, i.e., the down-sampling layer, includes a plurality of convolutional layers and a maximum pooling layer, which gradually reduces the size of the input data and increases the degree of abstraction of data features, and can effectively extract the context information of the picture. The upsampling path, i.e., the upsampling layer, includes a plurality of inverse convolutional layers and a convolutional layer, and is used to restore the data features to the original size.

Further, the deep learning model may also include an attention mechanism, the attention mechanism is used to retain the context information in the picture description information.

For example, the picture description information includes the addition of a blue cat and a black dog.

The attention mechanism then pairs the vector corresponding to [blue] and the vector corresponding to [cat], and pairs the vector corresponding to [black] and the vector corresponding to [dog] to form a two-dimensional array.

The deep learning model, when generating the first prediction noise, then directs the picture noise residual obtained by the prediction into the content represented by the picture description information based on the two-dimensional array generated by the text vector.

In this embodiment, the deep learning model combined with the attention mechanism can retain the context information in the picture description information, and the deep features are sampled by the deep learning model, so that the candidate picture generated finally is highly correspondent to the picture description information, which can satisfy the user requirements to ensure the user's experience.

S240, decoding the picture encoding information to generate a target picture corresponding to the picture generation information.

Specifically, after the picture encoding information is decoded by the decoder in the picture generation model, then it is converted into the target picture corresponding to the picture description information.

S250, importing the target picture into a laser machining process of the laser machining device.

The target picture is imported into the laser machining software and displayed on a page in the laser machining software. The laser machining software is used as a bridge between the generation of the target picture and the machining of the target picture. The laser machining software allows controlling the machining process of the laser machining device and adjusting the speed and frequency of the laser machining device.

Optionally, S250 can be described with reference to the aforementioned S130, which will not be repeated herein.

Optionally, the target picture is imported into the laser machining process in such a way that the target picture is displayed in a workspace of the laser machining program, where the size of the target picture can be adjusted, and the machining parameters of the laser machining can be modified.

The size of picture may include the length, width or pixels of the target picture, etc.; the machining parameters of the laser machining include the shape parameters, sharpness, grayscale, smoothness of the target picture, and the engraving density, engraving speed, engraving power, etc., which are not limited herein.

In this embodiment, the target picture is imported into the laser machining process, and the target picture can be used as a material and machined in the machined material for laser machining. The user only needs to upload the picture generation information in the whole process, and does not need to master professional picture editing software, the picture generation information is processed through the picture generation model, the target picture consistent with the picture description information is generated, and then the target picture is imported into the laser machining process, which helps to improve the efficiency of the user obtaining the target picture under the laser machining scene, and also improves the convenience of the user editing the picture used for laser machining.

In an embodiment, when the picture generation information includes picture description information and a to-be-processed picture, i.e., under the picture generating picture mode and the graffiti generating picture mode, the picture generation model includes a deep learning model, and S230 includes:

S231b, inputting the overall picture noise residual into the deep learning model to obtain a first prediction noise;
S232b, subtracting the picture noise residual from the first prediction noise to obtain a picture noise residual;
S233b, inputting the picture noise residual into the deep learning model to generate a second prediction noise;
S234b, subtracting the picture noise residual from the second prediction noise to obtain a new picture noise residual; and
S235b, inputting the new picture noise residual into the deep learning model to generate a new prediction noise, cyclically executing a process of subtracting the new picture noise residual output by a previous cycle from the new prediction noise until a number of cycles reaches a preset condition, and outputting the picture encoding information, the picture encoding information is the picture noise residual output by the previous cycle.

A cyclic process is represented as a sampling process of the picture processing model, and the specific process is to generate a new prediction noise based on the picture noise residual generated by the previous cycle, and then output the new picture noise residual by subtracting the picture noise residual outputted by the previous cycle from the new prediction noise.

As an embodiment, subtracting the picture noise residual from the second prediction noise to obtain the new picture noise residual refers to subtracting a matrix of the picture noise residual from a matrix of the new prediction noise to obtain the new picture noise residual.

Exemplarily, in the first cycle, a second prediction noise is generated based on the picture noise residual, and then the picture noise residual is subtracted from the second prediction noise to obtain the new picture noise residual.

In the second cycle, a new prediction noise is generated based on the picture noise residual output in the first cycle, and then the picture noise residual output in the first cycle are subtracted from the new prediction noise to output the new picture noise residual.

The value of the new picture noise residual output in the current cycle is different from the value of the picture noise residual output in the previous cycle, and the value of the new picture noise residual is smaller than the value of the picture noise residual output in the previous cycle.

When the number of cycles reaches the preset condition, the picture noise residual output from the last cycle is output as the picture encoding information.

The realization process of the cycle process can be illustrated by the following equation:

$$X_{t-1} = \frac{1}{\sqrt{\alpha_t}}\left(X_t - \frac{1-\alpha_t}{\sqrt{1-\overline{\alpha}_t}}\epsilon(X_t, t)\right)$$

Xt denotes the picture noise residual output by the picture processing model at the tth cycle, and $X_{t-1}$ denotes the picture noise residual output by the picture processing model at the t+1st cycle. $\frac{1-\alpha_t}{\sqrt{1-\overline{\alpha}_t}}\epsilon(X_t, t)$ denotes the prediction noise generated by the picture processing model at the current number of cycles.

When t=1, $X_0$ refers to the picture noise residual output after the last cycle, also known as the picture encoding information.

Optionally, the preset condition may be a preset number of cycles, which may be set within 20-50 times, such as 27 times, 30 times, 35 times, 48 times. The preset number of cycles may be set by the user or may be preset by the picture processing model during the training process.

In this embodiment, by cyclically executing the process of denoising the noise potential picture by the second prediction noise, the picture encoding information output finally includes both the content of the picture description information, and makes the clarity of the target picture obtained by the subsequent decoding better, which can effectively satisfy the user's needs.

In an embodiment, when the picture generation information includes only the picture description information, i.e., in the text generating picture mode, the image generation model includes a deep learning model, and S230 specifically includes: inputting the text vector into the deep learning model, generating the first prediction noise; and cyclically executing the process of subtracting the noise potential picture from the first prediction noise until the number of cycles reaches the preset number of cycles, and outputting the picture encoding information.

The process of generating the first prediction noise is the same as the aforementioned S231a, which will not be repeated herein.

The number of cycles can be set in advance, i.e., the number of sampling times is defined, and in the first sampling, the potential picture is subtracted from the prediction noise generated by the text vector, and the picture noise residual is outputted; the picture noise residual is then subtracted from the potential picture, to output a new picture noise residual, and the process of subtracting the potential picture from the picture noise residual is performed cyclically, until the preset number of times has been reached, and the picture noise residual finally output is outputted as the picture encoding information.

Exemplarily, the preset number of cycles may be set to 20-50 times, such as 27, 30, 35, 48 times. The preset number of times may be set by the user, or may be preset by the picture generation model during the training process.

Optionally, the picture generation model includes a U-NET neural network comprising a Cross-Attention mechanism and a scheduling algorithm.

The text vector and the potential picture are input into the U-NET neural network, and a prediction noise is output based on the input text vector; a new potential picture is obtained by subtracting the potential picture from the prediction noise, and the difference between the prediction noise and the potential picture is output as the picture noise residual; this process is called denoising a random potential picture. Under the scheduling of the scheduling algorithm, the denoising process will be processed in a cycle for 20-50 times, and after the processing is completed, the final picture noise residual is output, and the final picture noise residual is the picture encoding information.

In this embodiment, by cyclically executing the process of predicting the noise and diffusing the noise, the final output picture encoding information includes both the content of the picture description information, while the clarity of the target picture obtained by decoding is better, which can effectively meet the user's needs.

In the text generating picture mode, a picture generation request including picture description information is received, the picture description information is used to characterize the user's conception of the target picture to be found; the picture description information is input into the picture generation model, a candidate picture corresponding to the picture description information through the picture generation model is generated, and a target picture is selected from the candidate pictures, the target picture conforms to the user's conception of the required picture, satisfying the target picture conforms to the user's conception of the required picture and satisfies the user's needs, such that the user does not need to repeatedly search for the picture many times, which improves the efficiency of obtaining the laser machining picture. After generating the target picture, the target picture is imported into the laser machining process, and there is no need to perform the process of searching for the picture, downloading the picture and importing the picture, which saves time and efficiency.

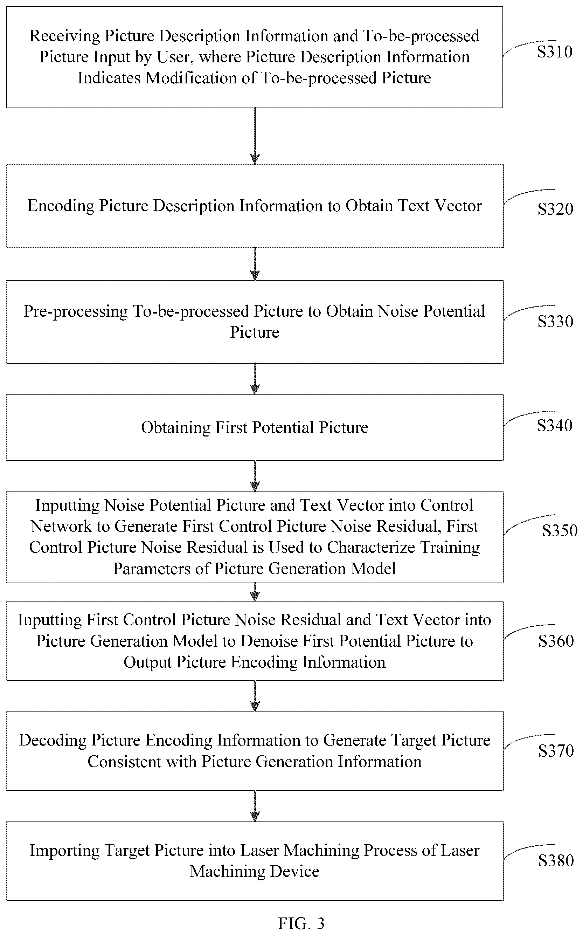

FIG. 3 is a flowchart of a picture processing method for laser machining according to an embodiment of the present application, which mainly describes a specific implementation process of the graffiti generating picture mode, including the following steps:

S310, receiving picture description information and a to-be-processed picture input by the user, where the picture description information indicates modification of the to-be-processed picture.

The to-be-processed picture in this embodiment is a graffiti picture, and the graffiti picture includes the user's graffiti traces.

S320, encoding the picture description information to obtain the text vector.

S330, pre-processing the to-be-processed picture to obtain the noise potential picture.

The process of S320 obtaining the text vector may refer to the aforementioned S221~S222, and the process of S330 obtaining the noise potential picture may refer to the aforementioned S223~S224, which will not be repeated herein.

S340, obtaining a first potential picture.

S350, inputting the noise potential picture and the text vector into a control network to generate a first control picture noise residual, the first control picture noise residual is used to characterize training parameters of the picture generation model.

S360, inputting the first control picture noise residual and the text vector into the picture generation model to denoise the first potential picture to output picture encoding information.

Specifically, the picture generation model operates in a potential space to generate the first potential picture in the potential space. The first potential picture is a randomly generated picture representation that serves to obtain a predicted picture, i.e., a target picture, by removing noise in the picture generation model. The potential space is capable of compressing the picture and reducing the amount of picture data, so that the amount of data to be processed by the picture generation model can be reduced and the efficiency of generating the target picture can be improved when performing the image prediction. After the picture description information and the graffiti picture are input into the picture generation model, the picture description information and the graffiti picture are first predicted to obtain a first control picture noise residual and a text vector.

The control network is used to adjust the input conditions input into the picture generation model to make the picture prediction behavior in the picture generation model more stable. The noise potential picture and the text vector are input into the control network to obtain the first control picture noise residual.

The first control picture noise residual aims to denoise the picture noise, so that it carries the training parameters of the picture generation model in the cyclic process, so that the picture generation model can generate a target picture that is more consistent with the description. The first control picture noise residual and the text vector are input into the picture generation model, and the picture generation model guides the process of picture prediction based on the first control picture noise residual, so that the sampling process prior to generating the picture encoding information is effective for noise removal, helping to ensure that the target picture is consistent with the user's modification intention.

The noise potential picture contains features of the graffiti picture, and based on the noise potential picture and the first potential picture, the control network obtains the graffiti position, the graffiti shape, and the graffiti color in the graffiti picture as the graffiti features of the graffiti picture through the graffiti detection algorithm, and the image generation model generates the target picture having the same composition according to the graffiti features, and additionally, by obtaining the graffiti region of the graffiti picture, description information consistent with the picture description information can be added to the graffiti region of the graffiti picture, thereby generating the target picture.

S370, decoding the picture encoding information to generate the target picture consistent with the picture generation information.

S380, importing the target picture into a laser machining process of the laser machining device.

S370~S380 may refer to the descriptions in the foregoing S240~S250, which will not be repeated herein.

In this embodiment, the control network can control the input conditions input into the picture generation model, and the first control picture noise residual output by the control network can guide the picture generation process of the picture generation model, so that the sampling process prior to generating the picture encoding information can be efficiently carried out to remove the noise, which can help to ensure that the ultimately generated target picture consistent with the picture description information and the graffiti picture.

In an embodiment, the image generation model includes a deep learning model, and S360 may include:

S361, inputting the text vector into the deep learning model to generate a first prediction noise; and
S362, denoising the first potential picture through the first prediction noise and the first control picture noise residual, to output picture encoding information.

Specifically, Gaussian noise is added to the text vector to generate the first prediction noise, and the first prediction noise is used to predict the first potential picture in the potential space in the image generation model. The process of generating the first prediction noise can be referred to the description in the foregoing S231a, which will not be repeated herein.

In this embodiment, the first potential picture is denoised by the first prediction noise generated from the text vector and the first control picture noise residual, which helps to improve rate of the target picture to be consistent with the user's modification intention.

In an embodiment, S361 may also be obtaining context information in the text vector, generating a sequential index based on the context information; constituting a sequential index array based on the sequential index and the text vector, and generating the first prediction noise by inputting the sequential index array into the deep learning model.

Specifically, the context information of the text vector may be extracted by the attention mechanism, the context information in the text vector is obtained, a sequential index is generated based on the context information, a sequential index array is constituted based on the text vector and the sequential index, and the first prediction noise is generated by inputting the sequential index array into the deep learning model.

In this embodiment, the context information in the text vector is extracted by the attention mechanism, so that the deep learning model can extract the context features therein, and the context features therein are retained during the denoising process, so that the ultimately generated target picture is more in line with the user's needs.

In an embodiment, S362 may include: subtracting the first potential picture from the first control picture noise residual and the first prediction noise, to obtain the overall picture noise residual; and outputting picture encoding information based on the overall picture noise residual.

Specifically, a matrix of the first potential picture is obtained and is subtracted from a matrix of the first control picture noise residual and a matrix of the first prediction noise to obtain the overall picture noise residual. The overall picture noise residual may be obtained by subtracting the matrix of the first potential picture from the matrix of the first control picture noise residual, and then subtracting the matrix of the first prediction noise.

As an optional embodiment, the overall picture noise residual may also be obtained by subtracting a matrix of the first potential picture from a matrix of the first prediction noise, and then subtracting a matrix of the first control picture noise residual.

In this embodiment, the process of obtaining the picture encoding information is performing a denoising operation, in other words, sampling, and the sampling serves to reduce the amount of noise previously added for picture prediction, to control the amount of noise in the final output of the picture encoding information, and to help ensure that the target picture is consistent with the user's modification intention.

In an embodiment, the process of outputting the picture encoding information based on the overall picture noise residual in S362 includes multiple cycles, and in a first cycle: inputting the overall picture noise residual into the deep learning model to generate a third prediction noise; inputting the overall picture noise residual, the noise potential picture into a control network, to output a second control picture noise residual; and comparing the matrix of the overall picture noise residual with the matrix of a third prediction noise, the matrix of the second control picture noise residual to obtain the new overall picture noise residual, up till now the cyclic process is completed once.

In a subsequent cycling process, the matrix of the updated prediction noise, the matrix of the control picture noise residual are required, and the updated prediction noise and the control picture noise residual are required to denoise the overall picture noise residual output from the last cycling, and when the number of cycles satisfies the preset conditions, the overall picture noise residual output from the last cycling are used as the picture encoding information.

The preset condition may be a preset number of cycles, the preset number of cycles may be preset, and exemplarily, the preset number of cycles may be set to 20-50 times, for example, 27 times, 30 times, 35 times, and 48 times, etc.. The preset number of cycles may be set by the user, or may be preset by the image generation model during the training process, without limitation herein.

In this embodiment, during the cycling process, the overall picture noise residual output becomes smaller and smaller, and the final output picture encoding information is decoded to obtain clearer the target picture.

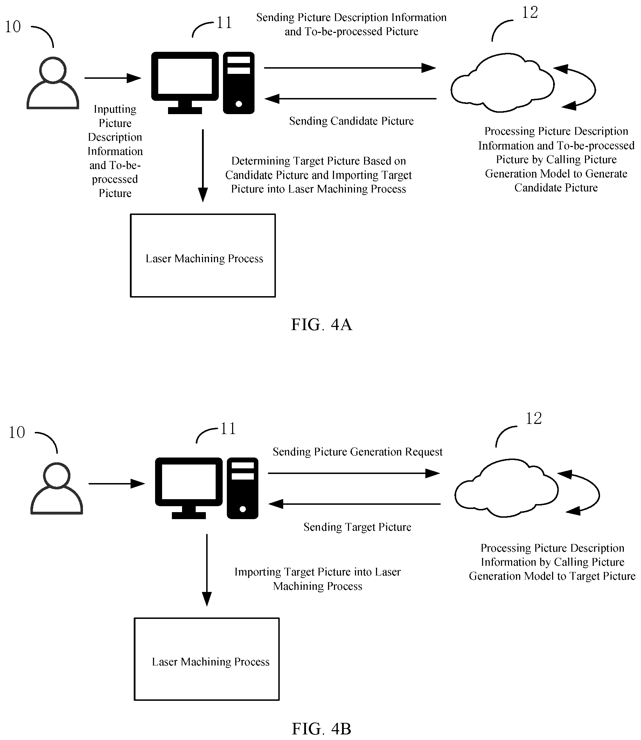

The technical solution provided in any embodiment of the present application may be executed by a terminal device, may be executed by a server, or may be executed jointly by the terminal device and the server. FIGS. 4A and 4B below illustrate, as an example, a case in which the technical solution of the present application is jointly executed by the terminal device 11 and the server 12, in which case the picture generation model is deployed in the server 12.

FIG. 4A is a schematic diagram of a first scene of the picture processing method for laser machining provided in this embodiment, in which the picture description information is embodied as text description information and the to-be-processed picture is an original picture.

As shown in FIG. 4A, the user 10 operates the terminal device 11, inputs the text description information and the original picture through the terminal device 11, and the terminal device 11 sends the text description information and the original picture over the Internet to the server 12. The picture processing model is invoked in the server 12, and the S120 or the S220~S240 described above in the present embodiment are executed to obtain the target picture.

The server 12 returns the target picture to the terminal device 11, displays the target picture in the terminal device 11, and performs the step of importing the target picture into the laser machining process.

The terminal device 11 may be a variety of electronic devices having a display and supporting web browsing, including but not limited to smartphones, tablet computers, e-book readers, Moving Picture Eperts Group Audio Layer III (MP3) players, Moving Picture Eperts Group Audio Layer IV (MP4) players, laptop and desktop computers, etc.

The server 12 may be a server that provides various services, such as a backend server that provides support for pages displayed on the terminal device 11.

In a possible embodiment, the terminal device 11 may also execute the picture processing method for laser machining provided in the embodiments of the present application, that is, the terminal device 11 generates and receives the text description information and the original picture, calls the picture generation model, and executes the above-described picture processing method for laser machining provided in the present embodiment to obtain the target picture.

FIG. 4B is a schematic diagram of a second scene of the picture acquisition method for laser machining provided in the present embodiment, in which the picture generation information includes only the picture description information.

As shown in FIG. 4B, the user 10 operates the terminal device 11, generates a picture generation request through the terminal device 11, and the terminal device 11 sends the picture generation request over the Internet to the server 12. The picture generation model is invoked in the server 12, and S120 or S220~S240 in the above embodiment is executed to obtain the target picture.

The server 12 returns the target picture to the terminal device 11, displays the target picture in the terminal device 11, and executes a process of importing the target picture into the laser machining process.

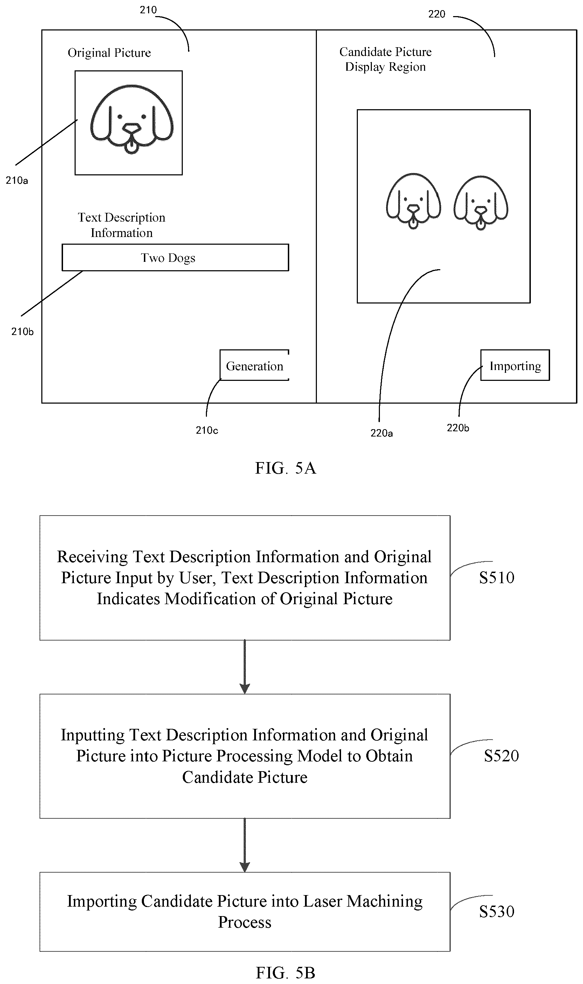

FIG. 5A is a schematic diagram of a third scene of the picture processing method for laser machining provided in the present embodiment, in which the to-be-processed picture is an original picture.

As shown in FIG. 5A, at 210, it is a region for the user to edit text description information and upload the original picture, where the text description information is the picture description information. At 210a, it is used to display the original picture uploaded by the user. At 210b, it is used to input the text description information, as shown in FIG. 5A, the text description information is: two dogs.

Combined with FIG. 5A, it can be seen that only one dog is included in the original picture, and the user wants to modify the original picture to two dogs.

After the user uploads the original picture and edits the text description information, the user may click on the control at 210c to upload the original picture and the text description information to the server, and in accordance with the process shown in FIG. 2, the target picture generated by the picture generation model is displayed at 220a at 220, and it can be seen that at this time, the candidate picture includes two dogs, which corresponds to the content of the text description information.

Optionally, the user may click on the control at 220b for importing the target picture into the laser machining process.

In this embodiment, by receiving the picture description information and the original picture, the picture description information is used to instruct the user to modify the original picture; the picture description information and the original picture are inputted into the picture generation model to obtain the target picture, which is the picture obtained by modifying the original picture according to the picture description information, and the user only uses to input the picture description information and upload the original picture, and the picture generation model then automatically modifies the original picture into a candidate picture corresponding to the picture description information, which can save the time of the user modifying the picture, and ensure that the modified candidate picture meets the needs of the user, and the user can adopt a more convenient way of editing the original picture, which helps to improve the efficiency of laser machining.

In the scene shown in FIG. 5A, the processing of the picture processing method for laser machining is shown in FIG. 5B and includes:

S510, receiving text description information and the original picture input by the user, the text description information indicates modification of the original picture;

S520, inputting the text description information and the original picture into a picture processing model to obtain a candidate picture; and

S530, importing the candidate picture into the laser machining process.

The text description information is the aforementioned picture description information, the original picture is the aforementioned to-be-processed picture, the picture processing model is the aforementioned picture processing module, and the candidate picture is equivalent to the aforementioned target picture, and the specific implementation process of each of the above steps can be referred to as described in the aforementioned embodiment, which will not be repeated herein.

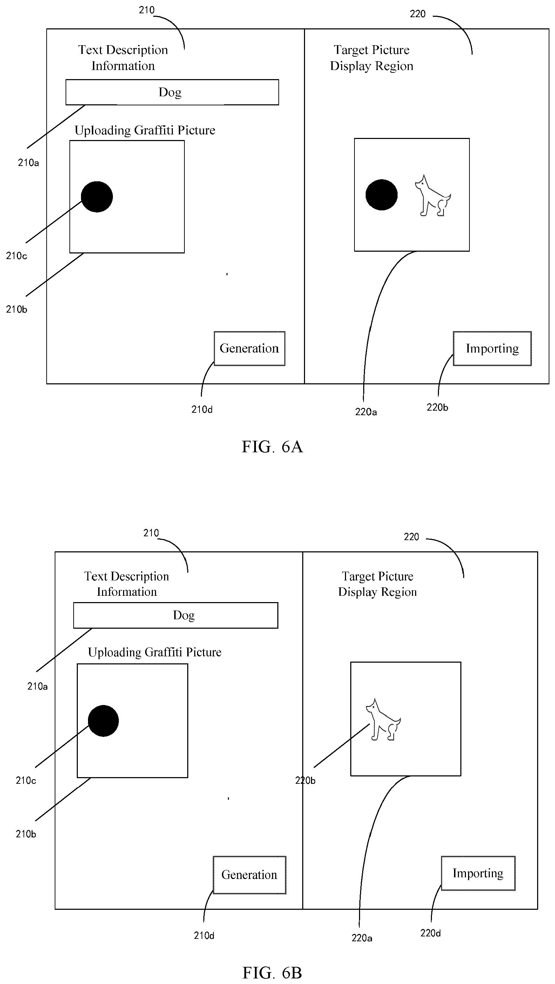

FIG. 6A is a schematic diagram of a fourth scene of the picture processing method for laser machining provided in the present embodiment, in which the to-be-processed picture is a graffiti picture.

As shown in FIG. 6A, at 210, the user inputs text via a text box at 210a for describing the user's intention to modify the graffiti picture, i.e., the picture description information is embodied as text description information.

At 210b, it is used to display the graffiti picture uploaded by the user, and at 210c,it is the graffiti trace of the user.

At 220, it is used to display the target picture, as shown at 220a.

As an optional embodiment of the present embodiment, the target picture may include a graffiti picture of the graffiti picture comprising a constituent element of the graffiti trace and a constituent element of the text description information.

FIG. 6B is a schematic diagram of a fifth scene of the picture processing method for laser machining provided in this embodiment, in which the to-be-processed picture is a graffiti picture.

As shown in FIG. 6B, at 210, the user inputs text via a text box at 210a for describing the user's intention to modify the graffiti picture, i.e., the picture description information is embodied as text description information.

At 210b, it is used to display the graffiti picture uploaded by the user, and at 210c,it is the graffiti trace of the user.

At 220, it is used to display the target picture, and as shown at 220a, the constituent elements in the text description information may replace the region where the graffiti traces are located in the graffiti picture, or directly generate elements consistent with the text description information in the region where the graffiti traces are located, which is not limited herein. The location at 220b of the target picture is the same as the location at 210c of the graffiti picture, and it can be seen that at 220b, the element [dog] replaces the graffiti traces at 210c.

In addition, the text description information entered by the user may be "change the position of the dog", etc., without limitation herein.

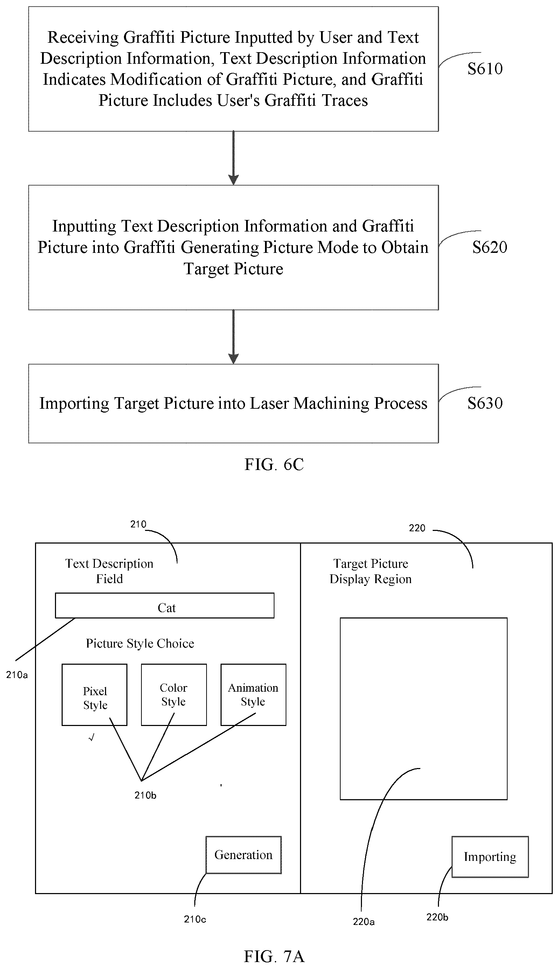

In the scene shown in FIGS. 6A and 6B, the processing of the picture processing method for laser machining is shown in FIG. 6C and includes the following steps:

S610, receiving a graffiti picture inputted by the user and text description information, the text description information indicates modification of the graffiti picture, and the graffiti picture includes the user's graffiti traces;

S620, inputting the text description information and the graffiti picture into a graffiti generating picture mode to obtain a target picture; and

S630, importing the target picture into the laser machining process.

The text description information is the aforementioned picture description information, and the graffiti picture is the aforementioned to-be-processed picture, the specific implementation process of each of the above steps can be referred to the description in the aforementioned embodiment, which will not be repeated herein.

FIG. 7A is a schematic diagram of a scene of the picture processing method for laser machining provided in the present embodiment.

As shown in FIG. 7A in 210, the user inputs text via a text box at 210a, and the text is used to characterize the user's conception of the target picture, i.e., picture description information.

At 210b, it is used to display a preview picture corresponding to each picture style, and the user can select one of the picture styles. After selecting the picture style and entering the text at 210a, the process of initiating the picture generation request is completed by clicking the control at 210c.

At 220, the target picture is displayed, as shown at 220a. The user initiates a picture generation request, which may correspond to the generation of one or more target pictures. The target pictures include the constituent elements at 210a, while the picture style is the selected picture style in 210b.

After the target pictures are displayed at 220, the user may click on the control at 220b to import the target pictures into the laser machining process.

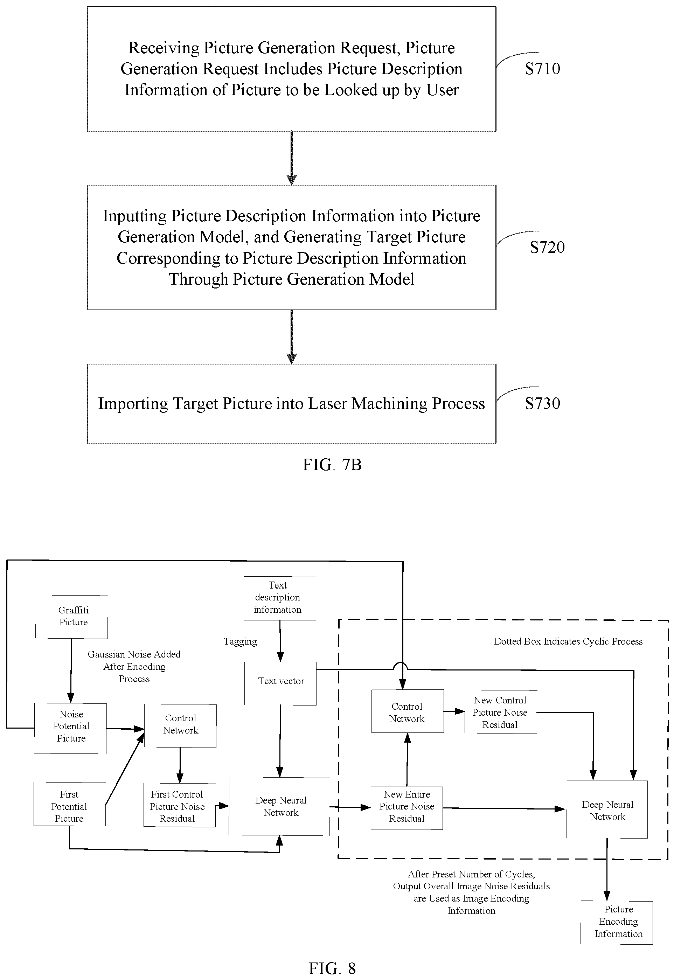

In the scene shown in FIG. 7A, the processing of the picture processing method for laser machining is shown in FIG. 7B and includes the following steps:

S710, receiving a picture generation request, the picture generation request includes picture description information of the picture to be looked up by the user;

S720, inputting the picture description information into a picture generation model, and generating a target picture corresponding to the picture description information through the picture generation model; and

S730, importing the target picture into the laser machining process.

The specific implementation process of each of the above steps can be referred to the description in the foregoing embodiments and will not be repeated herein.

FIG. 8 is a flowchart of a picture processing method for laser machining provided in the present embodiment. As shown in FIG. 8, the dashed box portion is a process of one cycle, and after a preset number of cycles, the picture encoding information is output. The specific realization process of the one cycle process can be referred to the description of the above embodiment and will not be repeated here.

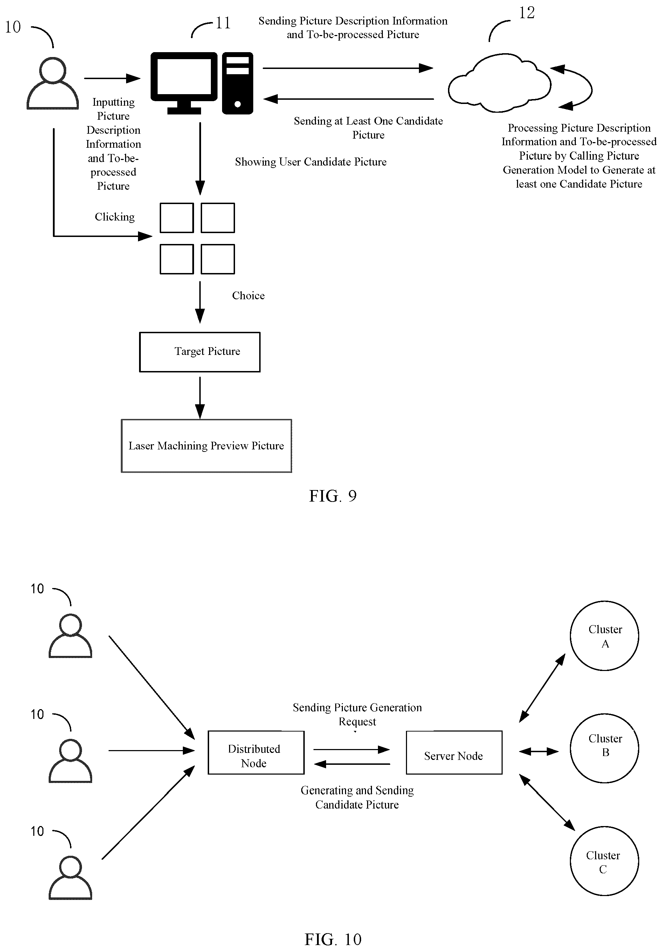

FIG. 9 is a schematic diagram of a sixth scene of the picture processing method for laser machining provided in the present embodiment. On the basis of FIG. 4A, the graffiti generating picture mode generates at least one candidate picture, and the terminal device 11 displays all the candidate pictures to the user 10. The user 10 clicks selected target picture among all the candidate pictures and generates a laser machining preview picture based on the target picture.

Specifically, when the number of candidate pictures is more than one, the user may select one of the candidate pictures as the target picture by clicking on one of the candidate pictures in the display interface of the candidate pictures.

Optionally, a reminder message reminding the user to select the target picture in the candidate pictures is generated to receive the clicking operation of the user, and the object of the clicking operation is taken as the target picture.

When the click operation of the user is received, the target picture is displayed in accordance with the parameter requirements of the laser machining.

The laser machining preview picture is the picture after the target picture is machined by the laser on the machined material.

The laser machining preview picture is generated based on display effect of the target picture on the processing picture.

After the laser machining preview picture is imported into the laser machining process, the target picture is actually determined to be the object of the laser machining, and the user can perform the machining task in the laser machining preview picture imported into the laser machining process.

In this embodiment, the laser machining preview picture is generated based on the target picture after determining the target picture to show the user the results of the machining of the target picture, and the user can determine whether the target picture can be used as the object of laser machining based on the laser machining preview picture, avoiding that the results do not conform to the expectations at the end of the laser machining process, and to a certain extent improving the user's experience of using the laser machining.

In an embodiment, after generating the laser machining preview picture based on the target picture, further includes:

obtaining picture modification information, the picture modification information is used to characterize the user's intention to modify the target picture; generating a new target picture based on the target picture and the picture modification information; after determining the target picture and generating the laser engraving picture based on the target picture, obtaining picture modification information of the user for the target picture, the picture modification information is used to indicate modification elements for further processing of the target picture; and predicting again based on the picture modification information and the target picture to generate a new target picture.

In this embodiment, by generating the laser engraving preview picture, the user may determine whether the target picture is to be modified based on the laser engraving preview picture, so as to avoid the low efficiency of the laser machining due to the processing result not meeting the expectation.

In an embodiment, the above-described process of modifying the target picture may be expressed as follows: displaying a laser machining preview picture of the target picture based on the working mode of the laser machining; receiving a parameter modification instruction, modifying the parameters of the laser machining preview picture according to the parameter modification instruction; in response to the parameter determination instruction, modifying the target picture according to the parameter determination instruction, and importing the modified target picture into the laser machining process.

Specifically, the working mode of the laser machining can be determined according to the shape, volume, material and other characteristics of the to-be-machined material, for example, when the to-be-machined material is a different object such as a wooden board, a round wooden column, a square, an acrylic, a mug and so on, the corresponding working mode is different.

The parameter modification instruction is an instruction to modify the parameters of laser machining. The parameters of laser machining can refer to size parameters, shape parameters, clarity, gray scale, smoothness, engraving density, engraving speed, engraving power and so on, without limitation here. The specific value of the parameter modification or the parameter to be modified needs to be determined according to the machined material. For example, the size and the type of the machined material will affect the size of the target picture.

The parameter determination instruction can be an instruction entered by the user to confirm the parameters of the current laser machining.

The laser machining preview picture is the preview picture of the effect of laser machining on the target picture, and the mapping relationship between the laser machining preview picture and the target picture is established, so that the laser machining preview picture is modified, while the target picture is also modified. After the parameters of the laser machining preview picture are modified according to the parameter modification instruction, the modified laser machining preview picture can be displayed in the page, or the modified target picture can be imported into the laser machining process directly based on the modified parameters and the parameter determination instruction.

In this embodiment, on the one hand, by modifying the parameters of the laser machining preview picture while modifying the parameters of the target picture, it is possible to intuitively show the effect of modifying the target picture on the result after the laser machining, which in turn improves the efficiency of modifying the parameters of the target picture, and ensures the effect after the laser machining. On the other hand, according to the correspondence between the working mode of the laser machining and the parameters of the target picture, the parameters of the target picture are adjusted, so that the target picture can be completely engraved onto the machined material, and the clarity of the machined pattern on the machined material can be ensured.

In an embodiment, a picture generation request initiated by a plurality of requesting parties is received by a distributed node, the picture generation request includes picture description information and a to-be-processed picture, and the distributed node is constructed based on clustering technology.

The picture description information and the to-be-processed picture are sent to a service node, and a graffiti generating picture mode is invoked through the service node to generate a corresponding candidate picture, and a target picture is determined based on the candidate picture.

FIG. 10 is a schematic diagram of a seventh scene of a picture processing method for laser machining provided in the present embodiment.

As shown in FIG. 10, the user 10 inputs the picture description information and uploads the original picture, the picture description information and the original picture are transmitted to the distributed node, the distributed node sends the picture description information and the original picture to the service node, and the picture description information and the original picture are processed by the picture processing model set up on the plurality of clusters, and the generated candidate picture is returned to the user 10.

Optionally, the distributed node is set up in a computer numerical control machine provided in this embodiment.

The distributed nodes are deployed according to Kubernetes technology to receive the picture description information and the to-be-processed picture input by the user through a plurality of distributed nodes, to ensure that they can respond to the request initiated by the user timely.

The service node is used to receive the picture description information and the original picture sent by the distributed nodes, and implement the picture processing method for laser machining provided by the above embodiments based on the picture description information and the original picture.

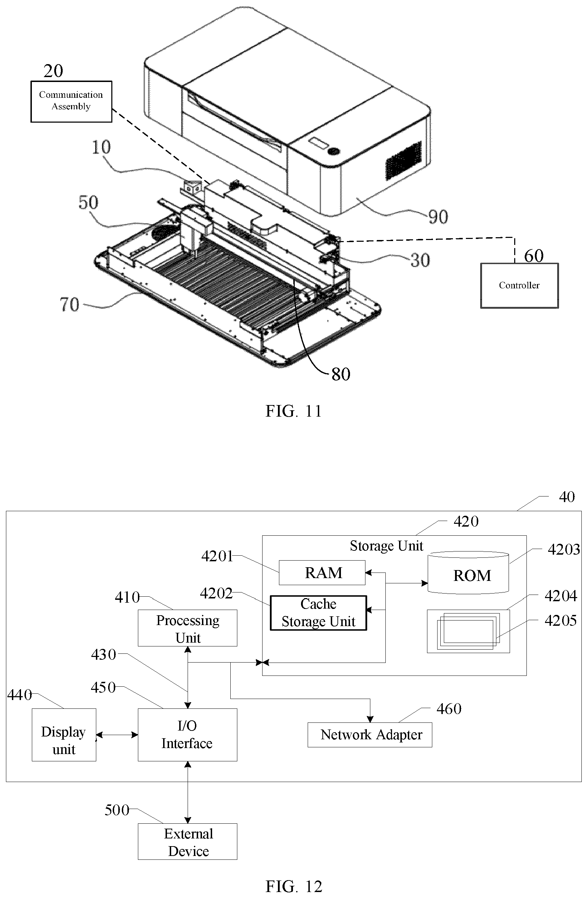

FIG. 11 schematically shows a schematic structure of a computer numerical control machine provided by an embodiment of the present application.

As shown in FIG. 11, the computer numerical control machine includes a housing, a movable head 50, a laser tube 30, a slide rail 80, a communication component 20, and a controller 60. The housing includes an upper housing 90 and a bottom housing 70. The movable head 50 is slidably provided on the slide rail 80. The communication assembly 20 is used to receive a target picture obtained from the steps of the method provided in the above embodiment. The controller 60, based on the target picture, controls the movable head 50 to move on the slide rail 80 to process the surface of the machined material. The communication component 20 and the controller 60 are mounted inside the back plate of the laser tube 30, which is not visible from the viewpoint in FIG. 11, and is therefore shown by a dashed line connection block diagram.

In an embodiment, a reflector 10 is provided between the movable head 50 and the laser tube 30, and a light beam generated by the laser tube 30 is reflected to the movable head 50 after passing through the reflector 10 and then emitted after reflection, focusing, etc. in order to machine the workpiece.

In one embodiment, the movable head 50 may generate a light spot, and in another embodiment, the light spot may be generated by other components such as the laser tube 30 of the carbon dioxide laser tube, etc., and pass through the mirrors 10, etc., into the beam ejection device, and finally pass through the movable head 50 and then be ejected to machine the workpiece. The machining head may emit laser light, but not only laser light.

In one embodiment, the housing of the computer numerical control machine, i.e., the upper housing 90 and the bottom housing 70 as shown in FIG. 11, together enclose to form an internal space that can accommodate the machinable material, and the upper housing 90 and the bottom housing 70 may be removably or fixedly connected to each other, or the upper housing 90 and the bottom housing 70 may both be of one-piece molded construction. In one embodiment, the upper housing 90 is further provided with a rotatable cover, and an operator can open the interior space by opening or closing the cover to put in or take out the machined material.

Through the blocking and/or filtering effect of the upper housing 90 and the bottom housing 70, it is possible to prevent the operator from being damaged caused by laser spillage of the laser emitted from the movable head 50 during operation.

Exemplarily, as shown in FIG. 11, the slide rail 80 is provided in the above-described interior space, and the movable head 50 is mounted on the slide rail 80. The slide rail 80 may be an X-axis guide rail, Y-axis guide rail, the X, Y-axis guide rail may be used, such as a linear guide rail, or a guide rail in which an optical axis slides in conjunction with a roller, etc., and only it can drive the movable head 50 to move in the X, Y axis for machining, and the movable head 50 may be provided with a guide rail in Z-axis for movement within the movable head 50 for focusing in the Z-axis before machining and/or during machining.

According to an aspect of embodiments of the present application, a numerical control system is provided, the numerical control system includes at least one computer numerical control machine and at least one processor;

the processor is used to perform the steps of the method provided in the above embodiment; and the computer numerical control machine transmits electromagnetic energy to a machined material arranged inside the computer numerical control machine based on a target picture obtained by the processor.

A schematic structure of a numerical control system provided by an embodiment of the present application is described below with reference to FIG. 12. The numerical control system shown in FIG. 12 is merely an example and should not impose any limitations on the functionality and scope of use of embodiments of the present application.

As shown in FIG. 12, the numerical control system 40 is represented in the form of a general purpose computing device. The components of the numerical control system 40 may include, but are not limited to, the above-described at least one processing unit 410, the above-described at least one storage unit 420, and a bus 430 connecting the different system components, including the storage unit 420 and the processing unit 410.

The memory unit stores program code, and the program code may be executed by the processing unit 410, such that the processing unit 410 performs the steps described in the description section of the exemplary method described above in this specification according to various exemplary embodiments of the present application. For example, the processing unit 410 may perform various steps as shown in FIG. 1.

The storage unit 420 may include a readable medium in the form of a volatile storage unit, such as a random access memory unit (RAM) 4201 and/or a cache memory unit 4202, and may further include a read-only storage unit (ROM) 4203.

The storage unit 420 may also include a program/utility 4204 having a set (at least one) of program modules 4205, such that the program modules 4205 include, but are not limited to: an operating system, one or more application programs, other program modules, and program data, and each of these examples, or some combination thereof, may include an implementation of a network environment.

The bus 430 may be a local area bus that represents one or more of several types of bus structures, including a memory cell bus or memory cell controller, a peripheral bus, a graphics acceleration port, a processing unit, or a local area bus that uses any of the multiple bus structures.

The computer numerical control machine 40 may also be in communication with one or more external devices 500 (e.g., keyboards, pointing devices, Bluetooth devices, etc.), and may also be in communication with one or more devices that enable the user to interact with the computer numerical control machine 40, and/or with any device that enables the computer numerical control machine 40 to communicate with one or more other computing devices (e.g., routers, modems, etc. ). Such communication may be carried out via an input/output (I/O) interface 450. The input/output (I/O) interface 450 is coupled to the display unit 440. And, the computer numerical control machine 40 may also communicate with one or more networks (e.g., a local area network (LAN), a wide area network (WAN), and/or a public network, such as the Internet) via a network adapter 360. As shown, the network adapter 460 communicates with other modules of computer numerical control machine 40 via bus 430. It should be appreciated that, although not shown in the figures, other hardware and/or software modules may be used in conjunction with the computer numerical control machine 40, including, but not limited to: microcode, device drives, redundant processing units, external disk drive arrays, RAID systems, tape drives, and data backup storage systems.

By the foregoing description of the embodiments, it is readily understood by those skilled in the art that the example embodiments described herein may be implemented by software or may be implemented by software in combination with the necessary hardware. Thus, the technical solution according to the embodiments of the present application may be embodied in the form of a software product that may be stored in a nonvolatile storage medium (which may be a CD-ROM, a USB flash drive, a removable hard disk, etc.) or on a network, and that includes a number of instructions to cause a computing device (which may be a personal computer, a removable terminal, etc.) to execute a picture processing method according to an embodiment of the present application for laser machining.

In an exemplary embodiment of the present application, there is also provided a computer-readable storage medium having computer-readable instructions stored thereon, which, when the computer-readable instructions are executed by a processor of the computer, cause the computer to execute the picture processing method for laser machining described in the above method embodiment section.

According to an embodiment of the present application, there is also provided a program product for implementing the method in the above-described method embodiment, which may employ a portable compact disk read-only memory (CD-ROM) and include program code, and which may be run on an end device, such as a personal computer. However, the program product of the present application is not limited thereto, and as used herein, the readable storage medium may be any tangible medium that contains or stores a program that may be used by or in combination with an instruction execution system, device, or device.

The program product may employ any combination of one or more readable medium. The readable medium may be a readable signal medium or a readable storage medium. The readable storage medium may, for example, be, but is not limited to, a system, device, or device or device that is electrical, magnetic, optical, electromagnetic, infrared, or semiconducting, or any combination of the above. More specific examples of readable storage medium (a non-exhaustive list) include: an electrical connection having one or more wires, a portable disk, a hard disk, a random access memory (RAM), a read-only memory (ROM), an erasable programmable read-only memory (EPROM or flash memory), a fiber optic, a portable compact disk read-only memory (CD-ROM), an optical storage device, a magnetic storage device, or any suitable combination of the above.

The computer readable signal medium may include a data signal propagated in the baseband or as part of a carrier carrying readable program code. Such propagated data signals may take a variety of forms, including, but not limited to, electromagnetic signals, optical signals, or any suitable combination of the foregoing. The readable signal medium may also be any readable medium other than a readable storage medium that sends, propagates, or transmits a program for use by, or in conjunction with, an instruction execution system, apparatus, or device.

The program code contained on the readable medium may be transmitted using any suitable medium including, but not limited to, wireless, wired, fiber optic cable, RF, etc., or any suitable combination of the foregoing.

The program code for performing the operations of the present application may be written in any combination of one or more programming languages, including object-oriented programming languages-such as JAVA, C++, etc., and also conventional procedural programming languages-such as the "C" or similar programming languages. The program code may be executed entirely on the user computing device, partially on the user device, as a stand-alone software package, partially on the user computing device and partially on a remote computing device, or entirely on a remote computing device or server. In situations involving a remote computing device, the remote computing device may be connected to the user computing device via any kind of network, including a local area network (LAN) or a wide area network (WAN), or, alternatively, may be connected to an external computing device (e.g., by utilizing an Internet Service Provider to connect via the Internet).

It should be noted that, although several modules or units of the device for action execution are mentioned in the detailed description above, this division is not mandatory. Indeed, according to embodiments of the present application, the features and functions of two or more modules or units described above may be specified in a single module or unit. Conversely, the features and functions of one module or unit described above may be further divided to be materialized by more than one module or unit.

Furthermore, although the various steps of the method in the present application are described in the accompanying drawings in a particular order, it is not required or implied that the steps must be performed in that particular order or that all of the steps shown must be performed in order to achieve the desired result. Additional or alternatively, certain steps may be omitted, a plurality of steps may be combined to be performed as a single step, and/or a single step may be broken down to be performed as a plurality of steps, etc.

By the above description of the embodiments, it is readily understood by those skilled in the art that the exemplary embodiments described herein may be realized by software, or by software in combination with the necessary hardware. Thus, the technical solution according to the embodiments of the present application may be embodied in the form of a software product that may be stored in a non-volatile storage medium (which may be a CD-ROM, a USB flash drive, a removable hard disk, etc.) or on a network, and that comprises a number of instructions to cause a computing device (which may be a personal computer, a mobile terminal, etc.) to perform the method according to the embodiments of the present application.

Other embodiments of the present application will readily come to mind to those skilled in the art upon consideration of the specification and practice of the invention disclosed herein. The present application is intended to cover any variations, uses, or adaptations of the present application that follow the general principles of the present application and include common knowledge or customary technical means in the art not disclosed herein. The specification and embodiments are to be regarded as exemplary only, and the true scope and spirit of this application is indicated by the appended claims.

## Claims

1. A picture processing method for laser machining, **characterized by** comprising:

   obtaining picture generation information for generating a target picture required by a user; wherein the picture generation information comprises at least picture description information;

processing the picture generation information by a picture generation model to obtain a target picture consistent with the picture generation information; and
importing the target picture into a laser machining process of a laser machining device.

2. The picture processing method for laser machining according to claim 1, wherein obtaining the picture generation information for generating the target picture required by the user comprises:

receiving picture description information and a to-be-processed picture input by the user, wherein the picture description information indicates modification of the to-be-processed picture; and
taking the picture description information and the to-be-processed picture as the picture generation information.

3. The picture processing method for laser machining according to claim 1, wherein obtaining the picture generation information for generating the target picture required by the user comprises:

receiving a picture generation request, wherein the picture generation request comprises picture description information of the target picture required by the user; and
taking the picture description information as the picture generation information.

4. The picture processing method for laser machining according to claim 1, wherein processing the picture generation information by the picture generation model to obtain the target picture consistent with the picture generation information comprises:

obtaining a text vector and a noise potential picture based on the picture generation information;
processing the text vector and the noise potential picture by the picture generation model to obtain picture encoding information; and
decoding the picture encoding information to generate the target picture consistent with the picture generation information.

5. The picture processing method for laser machining according to claim 4, wherein the picture generation information comprises the picture description information and the to-be-processed picture;
wherein obtaining the text vector and the noise potential picture based on the picture generation information comprises:

encoding the picture description information to obtain the text vector; and
pre-processing the to-be-processed picture to obtain the noise potential picture.

6. The picture processing method for laser machining according to claim 5, wherein pre-processing the to-be-processed picture to obtain the noise potential picture comprises:

extracting features of the to-be-processed picture to obtain picture features; and
adding Gaussian noise to the picture features to obtain the noise potential picture.

7. The picture processing method for laser machining according to claim 4, wherein obtaining the text vector and the noise potential picture based on the picture generation information comprises:

encoding the picture description information to obtain the text vector; and
obtaining a candidate potential picture, and taking the candidate potential picture as the noise potential picture.

8. The picture processing method for laser machining according to claim 5 or 7, wherein encoding the picture description information to obtain the text vector comprises:

performing a word division process on the picture description information to obtain a text sequence; and
encoding the text sequence to obtain the text vector.

9. The picture processing method for laser machining according to claim 5 or 7, wherein the picture generation model comprises a deep learning model, processing the text vector and the noise potential picture by the picture generation model to obtain the picture encoding information comprises:

inputting the text vector into the deep learning model to generate a first prediction noise;
subtracting the noise potential picture from the first prediction noise to obtain a picture noise residual; and
outputting the picture encoding information based on the picture noise residual.

10. The picture processing method for laser machining according to claim 9, wherein outputting the picture encoding information based on the picture noise residual comprises:

inputting the picture noise residual into the deep learning model to generate a second prediction noise;

subtracting the picture noise residual from the second prediction noise to obtain a new picture noise residual; and

inputting the new picture noise residual into the deep learning model to generate a new prediction noise, cyclically executing a process of subtracting the new picture noise residual output by a previous cycle from the new prediction noise until a number of cycles reaches a preset condition, and outputting the picture encoding information, wherein the picture encoding information is the picture noise residual output by the previous cycle.

11. The picture processing method for laser machining according to claim 9, wherein the text vector comprises at least one character, inputting the text vector into the deep learning model to generate the first prediction noise comprises:

processing the at least one character by an attention mechanism to obtain a two-dimensional array; and

inputting the two-dimensional array into the deep learning model to output the first prediction noise.

12. The picture processing method for laser machining according to claim 7, wherein the picture generation model comprises a deep learning model, processing the text vector and the noise potential picture by the picture generation model to obtain the picture encoding information comprises:

inputting the text vector into the deep learning model to generate a first prediction noise; and

cyclically performing a process of subtracting the noise potential picture from the first prediction noise until a preset number of cycles is reached, outputting the picture encoding information.

13. The picture processing method for laser machining according to claim 5, wherein processing the text vector and the noise potential picture by the picture generation model to obtain the picture encoding information comprises:

obtaining a first potential picture;

inputting the noise potential picture and the text vector into a control network to generate a first control picture noise residual, wherein the first control picture noise residual is configured to characterize training parameters of the picture generation model; and

inputting the first control picture noise residual and the text vector into the picture generation model to denoise the first potential picture to output the picture encoding information.

14. The picture processing method for laser machining according to claim 13, wherein the graffiti generating picture mode comprises a deep learning model; inputting the first control picture noise residual and the text vector into the graffiti generating picture mode to denoise the first potential picture to output the picture encoding information comprises:

inputting the text vector into the deep learning model to generate a first prediction noise;

denoising the first potential picture by the first prediction noise and the first control picture noise residual to output the picture encoding information.

15. The picture processing method for laser machining according to claim 14, wherein inputting the text vector into the deep learning model to generate the first prediction noise comprises:

obtaining context information in the text vector;

generating a sequential index based on the context information; and

forming a sequential index group based on the sequential index and the text vector, and inputting the sequential index group into the deep learning model to generate the first prediction noise.

16. The picture processing method for laser machining according to claim 14, wherein denoising the first potential picture to output the picture encoding information by the first prediction noise and the first control picture noise residual comprises:

subtracting the first potential picture from the first control picture noise residual and the first prediction noise to obtain an overall picture noise residual; and

outputting the picture encoding information based on the overall picture noise residual.

17. The picture processing method for laser machining according to claim 16, wherein outputting the picture encoding information based on the overall picture noise residual comprises:

inputting the overall picture noise residual into the deep learning model to obtain a third prediction noise;

inputting the overall picture noise residual and the potential picture into the control network to generate a second control picture noise residual;

subtracting the third prediction noise and the second control picture noise residual from the overall picture noise residual to obtain new overall picture noise residual; and

inputting the new overall picture noise residual into the deep learning model to obtain new prediction noise, cyclically executing a process of inputting the new overall picture noise residual and the latent picture output from a previous cycle into the control network to generate a new control picture noise residual, and subtracting the new picture noise residual from the new control picture noise residual and the prediction noise until a number of cycle times reaches a preset condition, outputting the picture encoding information;

wherein the picture encoding information is the overall picture noise residual output by the previous cycle.

18. The picture processing method for laser machining according to claim 1, wherein processing the picture generation information by the picture generation model to obtain the target picture consistent with the picture generation information comprises:

   processing the picture generation information by the picture generation model to obtain a candidate picture; and

   detecting a click operation on the candidate picture, and taking at least one candidate picture corresponding to the click operation as the target picture consistent with the picture generation information.

19. The picture processing method for laser machining according to claim 1, wherein importing the target picture into the laser machining process of the laser machining device comprises:

   displaying a laser machining preview picture of the target picture based on a working mode of the laser machining;

   receiving a parameter modification instruction, modifying the laser machining preview picture based on the parameter modification instruction; and

   in response to a parameter determination instruction, modifying the target picture based on the parameter determination instruction, and importing the modified target picture into the laser machining process of the laser machining device.

20. The picture processing method for laser machining according to claim 1, wherein, before processing the picture generation information by the picture generation model, the method further comprises:

   receiving a picture generation request initiated by a plurality of requestors through a distributed node, wherein the distributed node is constructed based on a clustering technique, and the picture generation request comprises the picture generation information;

   sending the picture generation request to a service node; and

   invoking the picture generation model through the service node.

21. A computer numerical control machine, **characterized by** comprising:

   a slide rail;

   a movable head, slidably provided on the slide rail;

   a communication component, for receiving the target picture obtained according to the picture processing method for laser machining according to any one of claims 1-20; and

   a controller, for controlling a movement of the movable head on the slide rail to machine a surface of the machined material based on the target picture.

22. A numerical control system, **characterized by** comprising at least one computer numerical control machine and at least one processor;

   wherein the processor is configured for performing the picture processing method for laser machining as claimed in any one of claims 1-20; and the computer numerical control machine is configured for transmitting electromagnetic energy to a machined material arranged inside the computer numerical control machine based on the target picture obtained by the processor.

23. A computer-readable storage medium, on which computer-readable instructions are stored, wherein when the computer-readable instructions, executed by a processor of a computer, cause the computer to perform the picture processing method for laser machining as claimed in any one of claims **1-20.**

24. A computer program product, **characterized by** comprising computer instructions, wherein the computer instructions, when executed by a processor, cause the computer to implement the picture processing method for laser machining as claimed in any one of claims 1-20.

Obtaining Picture Generation Information for
Generating Target Picture Required by User; Picture
Generation Information Includes at Least Picture
Description Information — S110

Processing Picture Generation Information by Picture
Generation Model to Obtain Target Picture Consistent
with Picture Generation Information — S120

Importing Target Picture Into Laser Machining Process
of Laser Machining Device — S130

FIG. 1

Obtaining Picture Generation Information for
Generating Target Picture Required by User; Picture
Generation Information Includes at Least Picture
Description Information — S210

Obtaining Text Vector and Noise Potential Picture
Based on Picture Generation Information — S220

Processing Text Vector and Noise Potential Picture by
Picture Generation Model to Obtain Picture Encoding
Information — S230

Decoding Picture Encoding Information to Generate
Target Picture Corresponding to Picture Generation
Information — S240

Importing Target Picture Into Laser Machining Process
of Laser Machining Device — S250

FIG. 2

Receiving Picture Description Information and To-be-processed Picture Input by User, where Picture Description Information Indicates Modification of To-be-processed Picture — S310

Encoding Picture Description Information to Obtain Text Vector — S320

Pre-processing To-be-processed Picture to Obtain Noise Potential Picture — S330

Obtaining First Potential Picture — S340

Inputting Noise Potential Picture and Text Vector into Control Network to Generate First Control Picture Noise Residual, First Control Picture Noise Residual is Used to Characterize Training Parameters of Picture Generation Model — S350

Inputting First Control Picture Noise Residual and Text Vector into Picture Generation Model to Denoise First Potential Picture to Output Picture Encoding Information — S360

Decoding Picture Encoding Information to Generate Target Picture Consistent with Picture Generation Information — S370

Importing Target Picture into Laser Machining Process of Laser Machining Device — S380

FIG. 3

10

11 Sending Picture Description Information
and To-be-processed Picture

12

Inputting
Picture
Description
Information
and To-be-
processed
Picture

Sending Candidate Picture

Processing Picture Description
Information and To-be-processed
Picture by Calling Picture
Generation Model to Generate
Candidate Picture

Determining Target Picture Based on
Candidate Picture and Importing Target
Picture into Laser Machining Process

Laser Machining Process

FIG. 4A

10

11

12

Sending Picture Generation Request

Sending Target Picture

Processing Picture Description
Information by Calling Picture
Generation Model to Target Picture

Importing Target Picture into Laser
Machining Process

Laser Machining Process

FIG. 4B

Original Picture

210a

Text Description
Information

Two Dogs

210b

Generation

210c

Candidate Picture
Display Region

Importing

220a    220b

FIG. 5A

Receiving Text Description Information and Original Picture Input by User, Text Description Information Indicates Modification of Original Picture

S510

Inputting Text Description Information and Original Picture into Picture Processing Model to Obtain Candidate Picture

S520

Importing Candidate Picture into Laser Machining Process

S530

FIG. 5B

210

220

Text Description
Information

Target Picture
Display Region

Dog

Uploading Graffiti Picture

210a

210c

210b

Generation

Importing

210d

220a

220b

FIG. 6A

210

220

Text Description
Information

Target Picture
Display Region

Dog

Uploading Graffiti Picture

210a

210c

210b

220b

Generation

Importing

210d

220a

220d

FIG. 6B

Receiving Graffiti Picture Inputted by User and Text Description Information, Text Description Information Indicates Modification of Graffiti Picture, and Graffiti Picture Includes User's Graffiti Traces

S610

Inputting Text Description Information and Graffiti Picture into Graffiti Generating Picture Mode to Obtain Target Picture

S620

Importing Target Picture into Laser Machining Process

S630

FIG. 6C

210

220

Text Description Field

Target Picture Display Region

Cat

Picture Style Choice

210a

Pixel Style

Color Style

Animation Style

√

210b

Generation

Importing

210c

220a

220b

FIG. 7A

Receiving Picture Generation Request, Picture
Generation Request Includes Picture Description
Information of Picture to be Looked up by User

S710

Inputting Picture Description Information into Picture
Generation Model, and Generating Target Picture
Corresponding to Picture Description Information
Through Picture Generation Model

S720

Importing Target Picture into Laser Machining Process

S730

FIG. 7B

FIG. 8

10

Inputting Picture Description Information and To-be-processed Picture

11

Sending Picture Description Information and To-be-processed Picture

12

Sending at Least One Candidate Picture

Showing User Candidate Picture

Processing Picture Description Information and To-be-processed Picture by Calling Picture Generation Model to Generate at least one Candidate Picture

Clicking

Choice

Target Picture

Laser Machining Preview Picture

FIG. 9

10

10

10

Sending Picture Generation Request

Distributed Node

Server Node

Generating and Sending Candidate Picture

Cluster A

Cluster B

Cluster C

FIG. 10

FIG. 11

FIG. 12

## INTERNATIONAL SEARCH REPORT

| International application No. |
| --- |
| **PCT/CN2024/119667** |

**A. CLASSIFICATION OF SUBJECT MATTER**

G06F 16/532(2019.01)i

According to International Patent Classification (IPC) or to both national classification and IPC

**B. FIELDS SEARCHED**

Minimum documentation searched (classification system followed by classification symbols)

IPC:G06F,G06V

Documentation searched other than minimum documentation to the extent that such documents are included in the fields searched

Electronic data base consulted during the international search (name of data base and, where practicable, search terms used)

CNTXT, ENTXT, ENTXTC, DWPI, WPABS, CNKI: 图像, 生成, 文字, 文本, 文生图, 模型, 深度学习, 激光, 加工, 噪声, 潜在, 注入, 编码, 解码, 特征提取, 预测, 残差, image, text, model, deep learning, laser, noise, inject, code, decode, feature extraction, prediction, residual

**C. DOCUMENTS CONSIDERED TO BE RELEVANT**

| Category* | Citation of document, with indication, where appropriate, of the relevant passages | Relevant to claim No. |
| --- | --- | --- |
| PX | CN 117773347 A (MAKEBLOCK CO., LTD.) 29 March 2024 (2024-03-29) entire document | 1-24 |
| X | CN 116597047 A (IFLYTEK CO., LTD. et al.) 15 August 2023 (2023-08-15) description, paragraphs 84-132, and figures 1-7 | 1-8, 18-24 |
| X | CN 116630465 A (HISENSE GROUP HOLDINGS CO., LTD.) 22 August 2023 (2023-08-22) description, paragraphs 16-128, and figures 1-7 | 1-8, 18-24 |
| X | CN 116306588 A (ALIBABA (CHINA) CO., LTD.) 23 June 2023 (2023-06-23) description, paragraphs 32-86, and figures 1-3 | 1-8, 18-20 |
| X | CN 113449139 A (ALIBABA GROUP HOLDING LIMITED) 28 September 2021 (2021-09-28) description, paragraphs 33-88, and figures 4-5 | 1-3 |
| A | CN 115861126 A (CHONGQING INNOVATION CENTER, BEIJING INSTITUTE OF TECHNOLOGY) 28 March 2023 (2023-03-28) entire document | 1-24 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 December 2024** | **26 December 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/119667**

| Patent document cited in search report | | | Publication date (day/month/year) | Patent family member(s) | | | Publication date (day/month/year) |
|---|---|---|---|---|---|---|---|
| CN | 117773347 | A | 29 March 2024 | None | | | |
| CN | 116597047 | A | 15 August 2023 | None | | | |
| CN | 116630465 | A | 22 August 2023 | CN | 116630465 | B | 24 October 2023 |
| CN | 116306588 | A | 23 June 2023 | None | | | |
| CN | 113449139 | A | 28 September 2021 | None | | | |
| CN | 115861126 | A | 28 March 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023112983031
- CN 202311299011X
- CN 2023113043678